# FASCICULE DE BREVET EUROPEEN

(11) **EP 3 146 131 B1**
(45) Date de publication et mention de la délivrance du brevet: **26.12.2018**
(21) Numéro de dépôt: 14833152.3
(22) Date de dépôt: 19.05.2014
(51) Int. Cl.: E04H 12/34, F03D 13/20

(54) **SYSTÈME D'ASSEMBLAGE ET PROCÉDÉ D'ASSEMBLAGE D'UNE TOUR POUR AÉROGÉNÉRATEUR**
MONTAGESYSTEM UND VERFAHREN ZUR MONTAGE EINES TURMS EINER WINDKRAFTANLAGE
ASSEMBLY SYSTEM AND METHOD FOR ASSEMBLING A TOWER FOR A WIND GENERATOR

(43) Date de publication de la demande: 29.03.2017
(73) Titulaire: Soletanche Freyssinet, 92500 Rueil Malmaison (FR)
(72) Inventeur: JOSS, Beat, CH-3323 Bäriswil (CH); FABRY, Nicolas, F-92160 Antony (FR); MELEN, Benoît, F-92270 Bois-Colombes (FR)
(74) Mandataire: Cabinet Plasseraud
(86) Numéro de dépôt international: PCT/FR2014/051158
(87) Numéro de publication internationale: WO 2015/177413

(56) Documents cités:
- EP-A1- 2 374 966
- WO-A2-2011/055021
- GB-A- 2 502 299
- US-A1- 2009 087 311

## Description

L'invention a pour objet un système d'assemblage d'une tour pour un aérogénérateur constituée d'une pluralité de blocs.

Typiquement, une telle tour est surmontée d'une nacelle et d'un rotor composé de plusieurs pâles pour former l'aérogénérateur.

Un système d'assemblage bien connu met en oeuvre une grue qui empile les blocs de la tour les uns sur les autres, avant de poser la nacelle et le rotor sur le bloc le plus élevé de la tour.

Néanmoins, l'utilisation de grues est coûteuse et leur mise à disposition peut ne pas être possible, selon les sites où la tour doit être implantée.

De plus, il n'est pas rare que les blocs se retrouvent endommagés au cours de leur manipulation par les grues.

Pour remédier à ces inconvénients, il est connu du document US 2011/0239584 de recourir à une structure de support comprenant une partie supérieure et une partie inférieure disposées respectivement au-dessus et au-dessous d'une plateforme.

Chaque bloc de la tour est monté autour de la partie inférieure de la structure de support par solidarisation de plusieurs panneaux en un cylindre creux.

La structure de support comprend deux câbles dont une extrémité est fixée à la plateforme. L'autre extrémité de chacun des câbles est fixée à une prise disposée à l'intérieur du bloc monté autour de la structure de support.

Chaque câble est alors tiré pour que l'extrémité fixée au bloc remonte le long de la partie inférieure de la structure de support.

Les documents US 2009/087311, GB 2 502 299 et WO 2011/055021 décrivent également un système d'assemblage d'une tour pour aérogénérateur constituée d'une pluralité de blocs et un procédé de fabrication associé.

De tels systèmes d'assemblage présentent l'inconvénient que le déplacement du bloc solidarisé aux câbles est délicat et parfois dangereux, en particulier en cas de vent fort, puisqu'il peut y avoir un déport horizontal du bloc et un basculement de la tour.

Il peut alors s'avérer nécessaire de prévoir des dispositifs de glissement, de type patin en téflon par exemple, entre l'intérieur du bloc et la structure de support.

Or, le contact direct entre les dispositifs de glissement et les blocs produit fréquemment un endommagement des blocs au moment de leur assemblage par le système d'assemblage.

De plus, de tels systèmes d'assemblage sont adaptés aux tours cylindriques uniquement, et ne peut pas être utilisé pour une autre forme de tour, en particulier pour une forme tronconique.

Le but de l'invention est de remédier au moins partiellement à ces inconvénients.

A cet effet, l'invention a pour objet un système d'assemblage d'une tour pour aérogénérateur constituée d'une pluralité de blocs, comprenant :
- une structure de levage de chacun desdits blocs, et
- une structure de support de ladite structure de levage, la structure de levage étant apte à être mobile relativement à la structure de support entre une position de préhension d'un bloc et une position de maintien des blocs, la structure de levage comprenant un organe de préhension de chaque bloc.

Grâce au système selon l'invention, le bloc est maintenu fermement au cours du déplacement de la structure de levage.

Selon une autre caractéristique de l'invention, l'organe de préhension comprend au moins une tige apte à pénétrer dans un évidement de chaque bloc.

Selon une autre caractéristique de l'invention, ladite au moins une tige est rétractable.

Ainsi, la longueur de la tige est adaptable à plusieurs diamètres différents des blocs, ce qui permet de monter une tour cylindrique ou tronconique par exemple.

Selon une autre caractéristique de l'invention, le système d'assemblage comprend une pluralité de tiges disposées sensiblement dans un même plan, et deux tiges adjacentes forment entre elles un angle de l'ordre de 360° divisé par le nombre total de tiges, et de préférence quatre tiges, deux tiges formant entre elles un angle de l'ordre de 90°.

Selon une autre caractéristique de l'invention, le système d'assemblage comprend au moins un bras de maintien faisant appui latéral de la structure de levage sur au moins un bloc dont la structure de levage est solidaire.

Selon une autre caractéristique de l'invention, le système d'assemblage comprend une pluralité de bras de maintien disposés à proximité d'une première extrémité du bloc et une pluralité de bras de maintien disposés à proximité d'une deuxième extrémité du bloc.

Selon une autre caractéristique de l'invention, le système d'assemblage comprend un dispositif de guidage de la structure de levage dans la structure de support.

Selon une autre caractéristique de l'invention, le dispositif de guidage comprend au moins un élément apte à glisser ou rouler le long d'un rail de la structure de support.

Selon une autre caractéristique de l'invention, le dispositif de guidage comprend deux paires desdits éléments, une première paire disposée à proximité d'une première extrémité de montants de la structure de levage et une deuxième paire disposée à proximité d'une deuxième extrémité desdits montants.

Selon une autre caractéristique de l'invention, la structure de support comprend au moins deux piliers disposés parallèlement l'un à l'autre.

Selon une autre caractéristique de l'invention, le système comprend un moyen moteur de la structure de levage dans la structure support.

Selon une autre caractéristique de l'invention, le moyen moteur comprend au moins un vérin à câble ou à barre filetée ou un dispositif à crémaillère ou un vérin de grande course.

Selon une autre caractéristique de l'invention, le moyen moteur comprend quatre vérins à câble, chaque câble étant connecté à un montant de la structure de levage et apte à coulisser relativement à la structure de support.

Selon une autre caractéristique de l'invention, le système comprend un dispositif de guidage de la structure de levage dans la structure de support.

Selon une autre caractéristique de l'invention, la structure de support et/ou la structure de levage comprend au moins une barre de rigidification.

L'invention a également pour objet un procédé d'assemblage d'une tour pour aérogénérateur constituée d'une pluralité de blocs, à partir d'un système d'assemblage comprenant :
- une structure de levage de chacun desdits blocs, et
- une structure de support de ladite structure de levage, la structure de levage étant apte à être mobile dans la structure de support entre une position de préhension d'un bloc et une position de maintien des blocs, la structure de levage comprenant un organe de préhension de chaque bloc, le procédé d'assemblage comprenant une étape de :
- préhension d'un bloc de la tour par l'organe de préhension de la structure de levage dans la position de préhension et
- déplacement de la structure de levage depuis la position de préhension jusqu'à la position de maintien des blocs.

Selon une autre caractéristique de l'invention, dans l'étape de déplacement, le bloc est solidaire de la structure de levage.

Selon une autre caractéristique de l'invention, le système d'assemblage est disposé de sorte que la direction de déplacement de la structure de guidage est une direction verticale, et dans lequel, dans la position de maintien des blocs, le bloc solidarisé à l'organe de préhension est maintenu à une hauteur plus élevée qu'une hauteur du bloc suivant à assembler.

Selon une autre caractéristique de l'invention, le procédé d'assemblage comprend une étape de dépôt d'un autre bloc dans le système d'assemblage, sous le bloc solidarisé à l'organe de préhension.

Selon une autre caractéristique de l'invention, le procédé d'assemblage comprend une étape de déplacement de la structure de levage depuis la position de maintien vers le bloc positionné au cours de l'étape de positionnement, jusqu'à ce que le bloc solidarisé à l'organe de préhension soit en contact avec le bloc positionné.

Selon une autre caractéristique de l'invention, le procédé d'assemblage comprend une étape de désolidarisation de l'organe de préhension et du bloc solidarisé à l'organe de préhension au cours de l'étape de préhension.

Selon une autre caractéristique de l'invention, le procédé d'assemblage comprend une étape de déplacement de la structure de levage jusqu'à la position de préhension.

Selon une autre caractéristique de l'invention, l'étape de préhension consiste à insérer une partie d'une tige rétractable dans un évidement du bloc à saisir.

Selon une autre caractéristique de l'invention, l'étape de désolidarisation consiste à rétracter une tige rétractable jusqu'à ce que la partie de la tige préalablement insérée dans le bloc soit disposée hors du bloc.

Selon une autre caractéristique de l'invention, au cours de chaque étape de déplacement de la structure de levage dans la structure de support, la structure de levage est guidée par le dispositif de guidage.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre un aérogénérateur comprenant une tour assemblée selon la présente invention ;
- la figure 2 illustre une vue en perspective d'un premier mode de réalisation d'un système d'assemblage dans une position de déplacement d'un bloc de la tour ;
- la figure 3 illustre une vue de dessus du système d'assemblage de la figure 2 ;
- la figure 4 illustre une structure de levage d'un système d'assemblage selon un deuxième mode de réalisation ;
- la figure 5 est une coupe schématique du système d'assemblage selon la présente invention comprenant des moyens de guidage d'une structure de levage dans une structure de support ; et
- la figure 6 illustre une cinématique schématique d'un procédé d'assemblage de la tour par le système d'assemblage selon la figure 1.

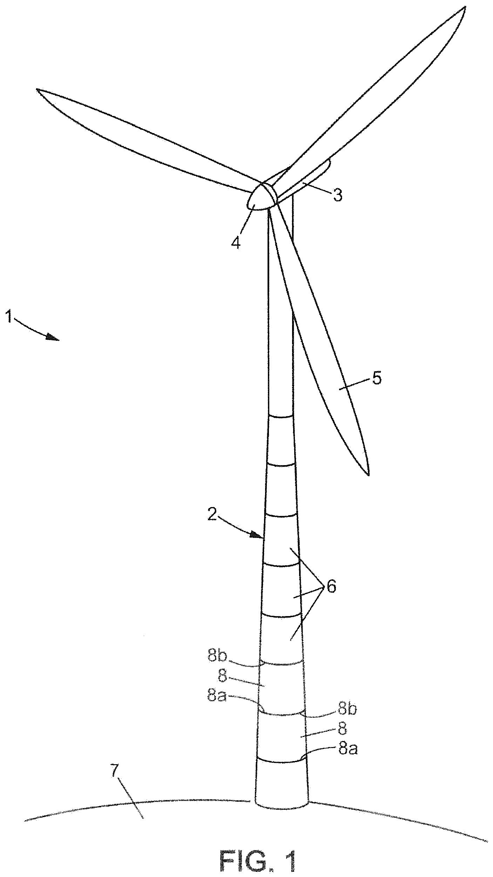

Comme illustré à la figure 1, un aérogénérateur 1 comprend une tour 2 surmontée d'une nacelle 3 et d'un rotor 4 composé de plusieurs pâles 5.

La tour 2 comprend une pluralité de blocs 6 empilés les uns sur les autres, de sorte que la tour 2 présente une forme générale allongée.

Pour la suite de la description, il est considéré que la tour 2 s'étend dans une direction verticale.

La tour 2 est rigidement solidaire d'une embase, suffisamment stable sur un sol 7, non visible sur la figure 1.

Chaque bloc 6 est constitué à partir d'une matière telle que du béton.

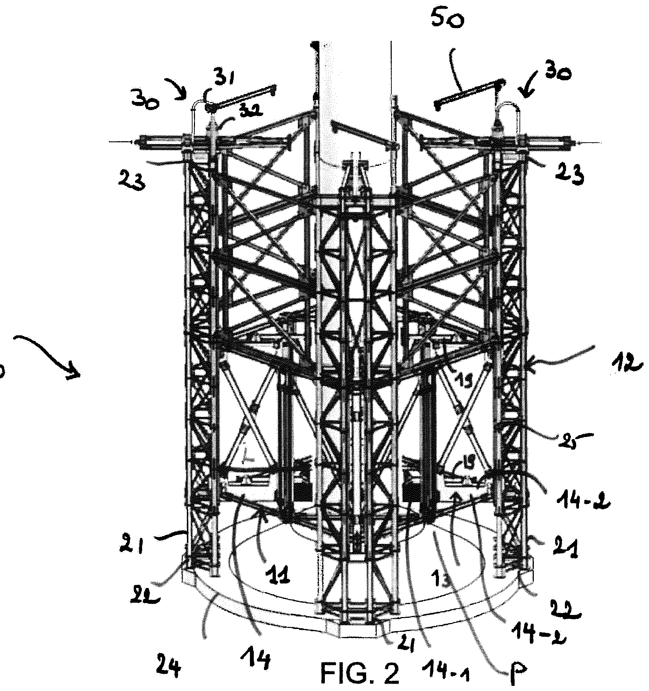

Chaque bloc 6 présente une forme générale tronconique, comme visible sur la figure 1, ou cylindrique, comme visible sur les figures 2 à 6.

Chaque bloc 6 comprend une paroi latérale 8 limitée par une extrémité dite inférieure 8a et une extrémité supérieure 8b, l'extrémité inférieure 8a d'un bloc 6 donné étant en contact avec l'extrémité supérieure 8b du bloc 6 disposé en dessous.

Comme illustré sur les figures 2 à 6, la tour 2 est assemblée par un système d'assemblage 10, comprenant :
- une structure de levage 11 de chacun des blocs 6, et
- une structure de support 12 de la structure de levage 11.

La structure de levage 11 est apte à être mobile relativement à la structure de support 12 entre une position de préhension d'un bloc 6 et une position de maintien des blocs 6.

La structure de levage 11 comprend un organe de préhension 13 de chaque bloc 6.

Dans la position de préhension, l'organe de préhension 13 est disposé à proximité du sol 7, tandis que dans la position de maintien, l'organe de préhension est disposé à une hauteur plus élevée, comme il sera détaillé ci-après.

La direction de déplacement de l'organe de préhension entre la position de préhension et la position de maintien s'étend dans la direction d'allongement de la tour 2, c'est-à-dire verticalement.

Comme visible sur les figures 2 à 6, l'organe de préhension 13 comprend au moins une tige 14 apte à pénétrer dans un évidement E de chaque bloc 6.

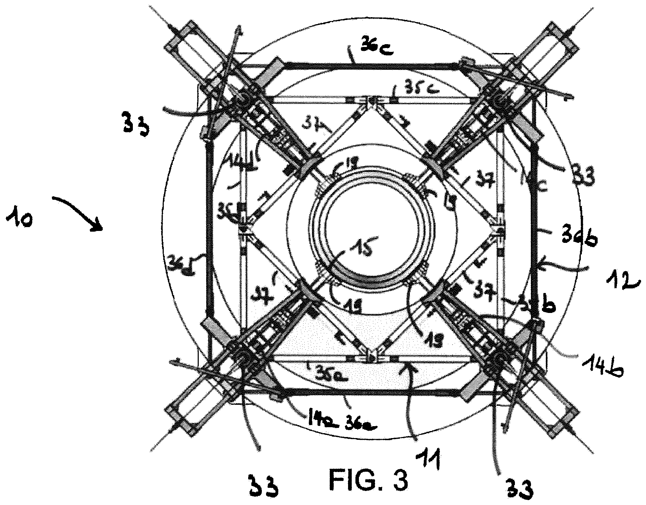

Sur les figures 2 et 3, la tige est une partie de poutre télescopique, comme il va être expliqué ci-après.

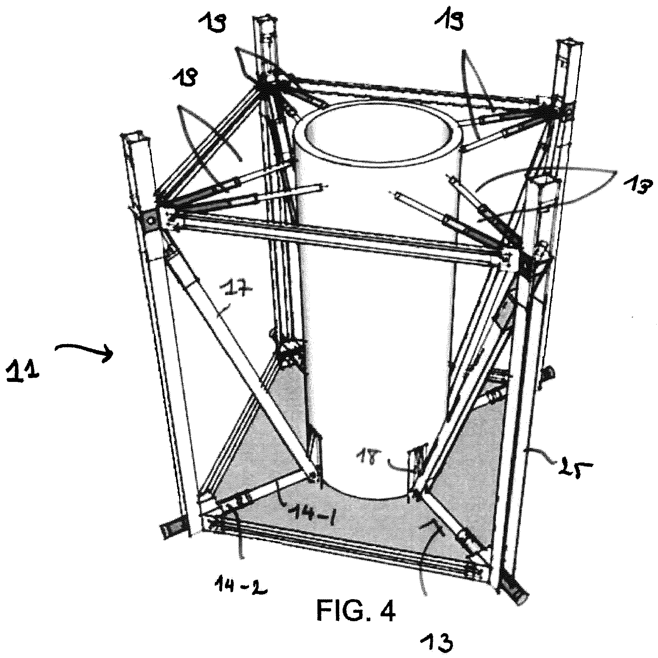

Sur la figure 4, la tige est une partie de vérin, comme il va être expliqué ci-après.

Un évidement E est disposé avantageusement dans l'extrémité inférieure 8a du bloc 6.

Comme illustré, le système 10 comprend une pluralité de tiges 14 disposées sensiblement dans un même plan et, de préférence, deux tiges adjacentes forment entre elles un angle de l'ordre de 360° divisé par le nombre total de tiges.

Sur les modes de réalisation illustrés, l'organe de préhension 13 comprend quatre tiges 14 disposées sensiblement dans même plan P et formant un angle de l'ordre de 90° deux à deux.

Sur les figures, les tiges sont référencées 14a, 14b, 14c, 14d, dans un sens anti-horaire.

Le plan P est orthogonal à la direction de déplacement de la structure de levage 11 dans la structure de support, et est préférentiellement horizontal quand la tour 2 est assemblée de sorte à être verticale.

Cette configuration des tiges 14a à 14d permet de bien stabiliser le bloc 6 à saisir pendant son déplacement par la structure de levage 11, et en particulier évite son déport du fait d'un vent soufflant horizontalement sur le système d'assemblage 10.

Chaque tige 14 est rétractable et présente une longueur L dans une direction contenue dans le plan P qui est changée en fonction notamment du diamètre du bloc 6 à saisir.

Sur le mode de réalisation illustré aux figures 2 et 3, chaque tige 14 est une poutre télescopique, comprenant une première partie de poutre 14-1 et une seconde partie de poutre 14-2. La première partie de poutre 14-1 est apte à être emmanchée dans la deuxième partie de poutre 14-2. Ainsi, en fonction du diamètre du bloc à saisir, la première partie de tige pénètre plus ou moins dans la deuxième partie de tige. La longueur L de la poutre 14 est alors la somme de la longueur de la deuxième partie de poutre et la longueur de la première partie de poutre qui est hors de la deuxième partie de poutre. La longueur L est maintenue par exemple par introduction d'au moins un axe ou goupille traversant chaque poutre télescopique de la deuxième partie de tige dans l'un des trous de la première partie de poutre.

On comprend que la première extrémité 15 de la poutre 14 solidaire du bloc 6 à saisir est l'une des extrémités de la première partie de tige. L'autre extrémité 16 de la poutre 14 est solidaire de la structure de levage 11, comme il sera détaillé ci-après.

Préférentiellement, les poutres 14 présentent une section de valeur élevée afin de résister aux efforts de flexion, traction et compression.

Sur le mode illustré à la figure 4, l'organe de préhension 13 comprend quatre vérins comprenant un piston 14-1 mobile dans un corps 14-2.

Dans ce mode de réalisation, la tige est le piston 14-1 dont la longueur varie en fonction de sa pénétration dans le corps 14-2 du vérin.

Une barre diagonale 17 est préférentiellement associée à chaque vérin 14 pour reprendre les efforts en traction, essentiellement verticaux, et ainsi assurer que le vérin ne travaille qu'en compression.

Un ergot 18 solidaire de l'extrémité mobile 15 du piston 14-1 maintient la tige 14 dans l'évidement E du bloc 6.

Pour chacun des modes de réalisation, du fait de la longueur L variable, le système d'assemblage 10 est adaptable à plusieurs diamètres différents des blocs 6, ce qui permet de monter une tour cylindrique ou tronconique par exemple.

De préférence, pour un bloc 6 donné, les longueurs de toutes les poutres 14 sont identiques.

Comme visible particulièrement aux figures 3 et 4, la structure de levage 11 comprend des bras de maintien 19.

Sur la figure 3, chaque bras de maintien 19 comprend une partie longitudinale et une partie de butée faisant appui latéral sur le bloc 6 solidaire de la structure de levage 11.

De préférence, la structure de levage 11 comprend quatre bras de maintien, chacun de ces bras de maintien étant disposé au-dessus et à proximité de la poutre 14 et la partie longitudinale s'étendant parallèlement à la poutre 14.

La structure de levage 11 comprend avantageusement quatre autres bras de maintien, disposés au niveau de l'extrémité 8b du bloc 6.

Eventuellement, les bras de maintien font appui sur une pluralité de blocs.

Alternativement, comme illustré en figure 4, la structure de levage 11 comprend une pluralité, par exemple quatre paires, de vérins formant les bras de maintien 19 de la structure de levage sur le bloc 6.

Ainsi, les tiges 14 et les bras de maintien 19 constituent les seules interfaces entre la structure de levage 11 et chaque bloc 6 dont elle est solidaire.

La structure de support 12 comprend au moins deux piliers 21 disposés parallèlement l'un à l'autre.

Sur les figures 2 à 5, la structure de support 12 comprend quatre piliers 21 s'étendant dans une direction parallèle à la direction de la tour 2, c'est-à-dire une direction verticale.

Les piliers 21 sont rigidement fixés par l'une 22 de leurs extrémités 22, 23, à l'embase 24, préférentiellement en béton.

L'embase 24 est suffisamment stable sur le sol du site où la tour 2 doit être implantée.

Les extrémités 22 sont disposées les unes relativement aux autres de sorte à former les quatre coins d'un rectangle ou d'un carré virtuel.

La structure de levage comprend avantageusement au moins quatre montants 25, chaque montant s'étendant parallèlement à l'un des piliers 21.

Comme visible sur les figures 2 à 5, les tiges sont solidaires par leur extrémité 16 de l'un des montants 25 de la structure de levage 11, chaque tige étant associée à l'un des montants 25. L'autre extrémité 15 de chaque tige 14 est apte à être disposée à l'intérieur du bloc 6 à saisir quand le bloc 6 doit être assemblé, comme déjà expliqué.

Ainsi, les tiges 14a à 14d sont alignées deux à deux, de façon à former deux diagonales discontinues du rectangle ou carré des montants de la structure de levage 11.

En d'autres termes, comme visible sur les figures, les extrémités 15 et 16 des poutres 14a et 14c sont alignées.

De même, les extrémités 15 et 16 des poutres 14b et 14d sont alignées.

Le système d'assemblage 10 comprend un moyen moteur 30 de la structure de levage 11 dans la structure support 12.

Le moyen moteur comprend par exemple au moins un vérin à câble ou à barre filetée ou un dispositif à crémaillère ou un vérin de grande course.

Sur les figures, le moyen moteur 30 comprend quatre vérins à câble, chaque câble 31 étant connecté à l'une des tiges et apte à coulisser relativement à la structure de support 12, dans l'un des piliers 21 ou au voisinage de l'un de ces piliers 21.

Un moyen de commande 32 actionne le câble 31.

Chaque câble 31 est ancré sur la structure de levage, de préférence à proximité d'une extrémité de l'une des portions de tige ou poutre 14.

Sur les figures 2 à 5, le système d'assemblage 10 comprend quatre câbles 31, un câble 31 étant introduit dans l'un des piliers 21.

Chaque câble 31 est solidaire par l'une 33 de ses extrémités, à la tige 14 associée au pilier 21 dans lequel le câble 31 est introduit ou de préférence au montant 25 dont est solidaire la tige 14.

La structure de levage 11 comprend au moins une barre de rigidification 35, ladite barre 35 s'étendant entre deux montants de la structure de levage 11.

La structure de support 12 comprend au moins une barre de rigidification 36 disposée entre deux piliers 21.

Comme visible sur les figures 2 à 5, la structure de levage 11 comprend quatre barres de rigidification 35a, 35b, 35c, 35d, deux barres adjacentes formant entre elles un angle sensiblement de 90°.

Comme visible sur les figures 2 à 5, la structure de support 10 comprend quatre barres de rigidification 36a, 36b, 36c, 36d, chacune des barres de rigidification 35 étant disposée parallèlement à l'une des barres de rigidification 36.

Avantageusement, la structure de levage 11 et/ou la structure de support 12 comprend des barres supplémentaires de rigidification, par exemple diagonales, dans un plan horizontal ou vertical notamment, pour assurer la résistance et la rigidité suffisante du système d'assemblage au cours du procédé d'assemblage de la tour.

Par exemple, sur la figure 3, sont visibles des barres 37 formant un losange tel que la longueur de chaque barre est supérieure au plus grand diamètre des blocs à assembler.

Le système d'assemblage 10 comprend avantageusement un dispositif de guidage 40 de la structure de levage 11 dans la structure de support 12.

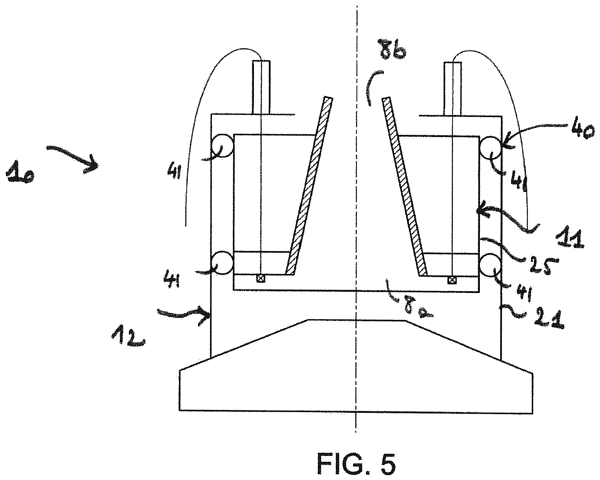

Ce dispositif de guidage est représenté très schématiquement à la figure 5, sous forme d'au moins un élément 41 apte à glisser ou rouler le long d'un rail 42 dont est munie la structure de support 12 préférentiellement le long de chaque pilier 21.

Chaque élément 41 est solidaire d'un montant 25 de la structure de levage 11.

L'élément 41 peut être également un patin, par exemple de type inox ou téflon, ou de type acier graissé ou encore de type rouleur.

Le dispositif de guidage 40 assure la stabilité de la structure de levage au cours de ses déplacements, en particulier du fait que l'invention permet le guidage rectiligne de la structure de levage dans la structure de support.

Comme visible, le dispositif de guidage 40 comprend une première paire d'éléments 41 disposés à proximité de l'extrémité 8a du bloc 6, en vis-à-vis l'un de l'autre de part et d'autre du bloc 6.

Le dispositif de guidage 40 comprend une deuxième paire d'éléments 41 disposés à proximité de l'autre extrémité 8b du bloc 6, en vis-à-vis l'un de l'autre de part et d'autre du bloc 6.

La distance entre les deux éléments des paires situés d'un même côté du bloc 6 est choisie de façon à former un bras de levier.

La structure de levage 11 et la structure de support 12 peuvent être assimilées à deux cages télescopiques, la structure de levage coulissant par l'extrémité 16 des tiges 14 dans chaque pilier 21, le coulissement étant stabilisé par le dispositif de guidage.

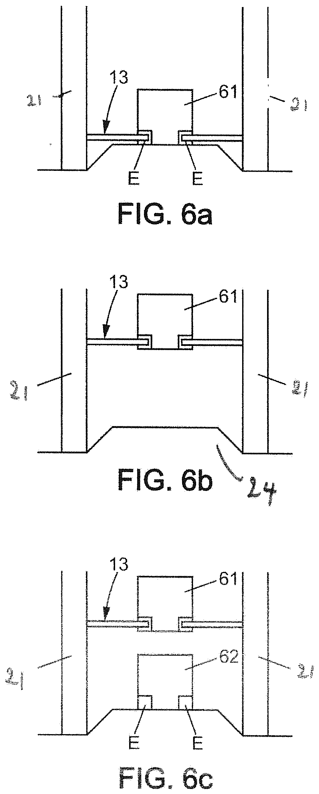

Les figures 6a à 6e illustrent un procédé d'assemblage de la tour 2 à partir du système d'assemblage 10, le procédé d'assemblage comprenant une étape de :
- préhension d'un bloc 6 de la tour 2 par l'organe de préhension 13 de la structure de levage 11 dans la position de préhension et
- déplacement de la structure de levage 11 depuis la position de préhension jusqu'à la position de maintien des blocs 6.

Comme déjà expliqué, le système d'assemblage 10 est disposé de sorte que la direction de déplacement de la structure de guidage est une direction verticale.

Dans la position de maintien des blocs, le bloc 6 solidarisé à l'organe de préhension 13 est maintenu à une hauteur plus élevée qu'une hauteur du bloc suivant à assembler.

Dans la position de préhension, l'organe de préhension est disposé près de l'embase 24, comme il va être expliqué ci-après.

Dans le cas illustré mais non limitatif, le sens de déplacement de la structure de levage est de bas en haut depuis la position de préhension jusqu'à la position de maintien, et de haut en bas depuis la position de maintien jusqu'à la position de préhension.

Comme visible à la figure 6a, un premier bloc 61, est disposé dans le système d'assemblage 10, posé sur l'embase 24.

Chaque évidement E du premier bloc 61 est disposé en regard de chaque poutre 14 de l'organe de préhension, lui-même en position de préhension.

La cage de levage 11 est positionnée au pied de la cage support 12, à une hauteur correspondant au niveau des évidements E.

Chaque poutre 14 est rétractée, de sorte que le bloc 61 est libre dans le système d'assemblage 10.

Dans l'étape de préhension, la longueur de chaque poutre 14 est réglée de façon à faire pénétrer une portion de la poutre 14 dans le bloc 61 par l'évidement E. Puis, la longueur L est maintenue fixée par exemple par mise en place de goupilles entre les deux parties comme déjà expliqué.

A l'issue de l'étape de préhension, le bloc 61 est maintenu fermement par l'organe de préhension 13.

Ensuite, la structure de levage 11 solidaire du bloc 61 coulisse dans la structure de support 12.

Chaque câble 31 est tiré par son moyen de commande 32, ce qui déplace vers le haut des piliers 21 le bloc 61.

Au cours de ce déplacement, le coulissement de la structure de levage est stabilisé par le dispositif de guidage.

L'organe de préhension se déplace jusqu'à la position de maintien du bloc 61 à une hauteur plus élevée que la hauteur du bloc suivant 62 à assembler, illustrée à la figure 6b.

Dans une étape suivante, le bloc 62 est déposé dans le système d'assemblage 10, sous le bloc 61 solidarisé à l'organe de préhension 13, comme visible à la figure 6c.

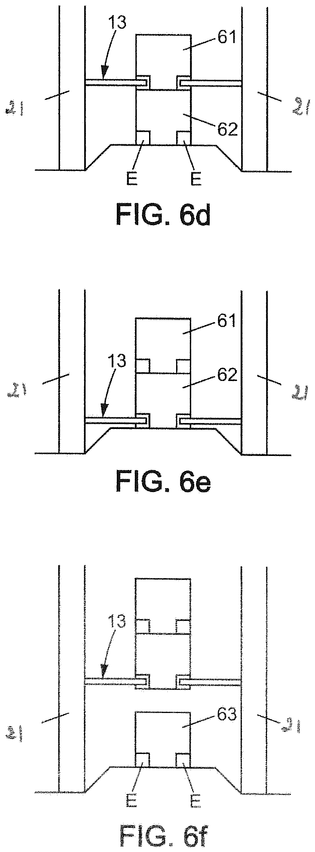

Ensuite, le procédé comprend une étape de déplacement de la structure de levage 11 depuis la position de maintien vers le bloc 62, jusqu'à ce que le bloc 61 solidarisé à l'organe de préhension 13 soit posé sur le bloc 62, comme visible à la figure 6d.

Puis, le procédé d'assemblage comprend une étape de désolidarisation de l'organe de préhension 13 et du bloc 61, par exemple par rétractation de la première partie de tige de chaque poutre 14 hors du bloc 61.

Puis, le procédé d'assemblage comprend une étape de déplacement de l'organe de préhension jusqu'à la position de préhension, l'organe de préhension se déplaçant vers l'embase 24 jusqu'à la position de préhension, comme visible à la figure 6d.

Une fois que le bloc 61 et le bloc 62 sont au contact l'un de l'autre, le procédé peut comprendre une étape de solidarisation définitive des blocs, par exemple par coulage d'un coulis de béton formant joint entre l'extrémité inférieure du bloc 61 et l'extrémité supérieure du bloc 62.

Puis, dans une nouvelle étape de préhension, l'organe de préhension se saisit du bloc 62 solidaire du bloc 61, comme illustré en figure 6e, et le déplace depuis la position de préhension jusqu'à la position de maintien.

Un troisième bloc 63 est placé dans le système d'assemblage 10 sous l'ensemble des blocs 61 et 62 maintenus, comme visible à la figure 6f.

L'organe de préhension déplace alors l'ensemble des blocs 61 et 62 maintenus jusqu'à ce que les blocs 62 et 63 soient en contact l'un avec l'autre.

L'organe de préhension est désolidarisé du bloc 63 et se déplace jusqu'à sa position de préhension où il vient se saisir du bloc 63, préalablement joint, par exemple par du béton, au bloc 62.

Les différentes étapes se répètent jusqu'à ce que tous les blocs 6 formant la tour 2 soient empilés les uns sur les autres.

On comprend que le procédé d'assemblage de la tour permet de monter la tour de haut en bas, c'est-à-dire que le premier bloc monté est celui destiné à être le plus haut de la tour 2.

Ainsi, le système d'assemblage et le procédé d'assemblage selon l'invention permettent d'assembler une tour pour aérogénérateur, sans recourir à des grues de levage de forte capacité tout en maintenant un niveau de sécurité suffisant.

En particulier, les interfaces entre le système d'assemblage et les blocs à assembler sont réduits à l'organe de préhension, voire en complément aux bras de maintien, ce qui assure de ne pas endommager les blocs au cours de leur manipulation.

Par ailleurs, le dispositif de guidage assure la stabilité du déplacement rectiligne de la structure de levage dans la structure de support.

On note que dans les modes de réalisation illustré, chaque évidement E est disposé à proximité de l'extrémité inférieure de chaque bloc 6 ; bien entendu, l'invention n'est pas limitée à cet arrangement.

En addition des bras de maintien, il est possible de prévoir des moyens de maintien provisoires 50 de la tour en train d'être assemblée, ces moyens provisoires étant disposés sur l'extrémité 23 de chaque pilier 21, et agissent de préférence au moment du déplacement de la structure de levage vers l'embase 24, de la position de maintien vers la position de préhension.

## Revendications

1. Système d'assemblage d'une tour (2) pour aérogénérateur (1) constituée d'une pluralité de blocs (6), comprenant :
- une structure de levage (11) de chacun desdits blocs (6), et
- une structure de support (12) de ladite structure de levage (11), la structure de levage (11) étant apte à être mobile relativement à la structure de support (12) entre une position de préhension d'un bloc et une position de maintien des blocs,
la structure de levage (11) comprend un organe de préhension (13) de chaque bloc (6), **caractérisé en ce que** l'organe de préhension (13) comprenant au moins une tige (14) rétractable apte à pénétrer dans un évidement (E) de chaque bloc (6).

2. Système d'assemblage selon la revendication 1, comprenant une pluralité de tiges (14) disposées sensiblement dans un même plan et deux tiges adjacentes formant entre elles un angle de l'ordre de 360° divisé par le nombre total de tiges, et de préférence quatre tiges, deux tiges formant entre elles un angle de l'ordre de 90°.

3. Système d'assemblage selon l'une des revendications précédentes, comprenant au moins un bras de maintien (19) faisant appui latéral de la structure de levage (11) au moins sur un des blocs dont la structure de levage (11) est solidaire.

4. Système d'assemblage selon la revendication 3, comprenant une pluralité de bras de maintien (19) disposés à proximité d'une première extrémité (8a) du bloc et une pluralité de bras de maintien (19) disposés à proximité d'une deuxième extrémité du bloc (8b).

5. Système d'assemblage selon l'une quelconque des revendications précédentes, comprenant un dispositif de guidage (40) de la structure de levage (11) dans la structure de support (12).

6. Système d'assemblage selon la revendication précédente, dans lequel le dispositif de guidage (40) comprend au moins un élément (41) apte à glisser ou rouler le long d'un rail de la structure de support.

7. Système d'assemblage selon la revendication précédente, dans lequel le dispositif de guidage (40) comprend deux paires desdits éléments (41), une première paire disposée à proximité d'une première extrémité de montants (25) de la structure de levage (11) et une deuxième paire disposée à proximité d'une deuxième extrémité desdits montant (25) de la structure de levage (11).

8. Système d'assemblage selon l'une des revendications précédentes, dans lequel la structure de support (12) comprend au moins deux piliers (21) disposés parallèlement l'un à l'autre.

9. Système d'assemblage selon l'une des revendications précédentes, comprenant un moyen moteur (30) de la structure de levage (11) dans la structure support (12).

10. Système d'assemblage selon la revendication précédente, dans lequel le moyen moteur (30) comprend au moins un vérin à câble ou à barre filetée ou un dispositif à crémaillère ou un vérin de grande course.

11. Système d'assemblage selon la revendication précédente, dans lequel le moyen moteur comprend quatre vérins à câble, chaque câble étant connecté à l'un des montants de la structure de levage et apte à coulisser relativement à la structure de support.

12. Système d'assemblage selon l'une des revendications précédentes, dans lequel la structure de support et/ou la structure de levage comprend au moins une barre de rigidification (35, 36).

13. Procédé d'assemblage d'une tour (2) pour aérogénérateur (1) constituée d'une pluralité de blocs (6), à partir d'un système d'assemblage (10) comprenant :
- une structure de levage (11) de chacun desdits blocs (6), et
- une structure de support (12) de ladite structure de levage (11), la structure de levage (11) étant apte à être mobile dans la structure de support (12) entre une position de préhension d'un bloc et une position de maintien des blocs, la structure de levage (11) comprenant un organe de préhension (13) de chaque bloc (6), l'organe de préhension (13) comprenant au moins une tige (14) rétractable apte à pénétrer dans un évidement (E) de chaque bloc (6), le procédé d'assemblage étant **caractérisé en ce qu'**il comprend une étape de :
- préhension par ladite au moins une tige rétractable (14) d'un bloc (61) de la tour par l'organe de préhension (13) de la structure de levage (11) dans la position de préhension, et
- déplacement de la structure de levage (11) depuis la position de préhension jusqu'à la position de maintien des blocs, le déplacement étant effectué par coulissement de la structure de levage (11) dans la structure de support (12).

14. Procédé d'assemblage selon la revendication 13, dans lequel, dans l'étape de déplacement, le bloc (61) est solidaire de la structure de levage.

15. Procédé d'assemblage selon la revendication 13 ou 14, dans lequel le système d'assemblage (10) est disposé de sorte que la direction de déplacement de la structure de guidage est une direction verticale, et dans lequel, dans la position de maintien des blocs, le bloc (61) solidarisé à l'organe de préhension (13) est maintenu à une hauteur plus élevée que la hauteur du bloc suivant (62) à assembler.

16. Procédé d'assemblage selon l'une des revendications 13 à 15, comprenant une étape de dépôt d'un autre bloc (62) dans le système d'assemblage, sous le bloc (61) solidarisé à l'organe de préhension (13).

17. Procédé d'assemblage selon la revendication 16, comprenant une étape de déplacement de la structure de levage (11) depuis la position de maintien vers le bloc déposé au cours de l'étape de dépôt, jusqu'à ce que le bloc (61) solidarisé à l'organe de préhension soit posé sur le bloc déposé (62).

18. Procédé d'assemblage selon la revendication 17, comprenant une étape de désolidarisation de l'organe de préhension (13) et du bloc solidarisé (61) à l'organe de préhension (13) au cours de l'étape de préhension.

19. Procédé d'assemblage selon la revendication 18, comprenant une étape de déplacement de la structure de levage (11) jusqu'à la position de préhension.

20. Procédé d'assemblage selon l'une des revendications 13 à 19 à partir du système d'assemblage selon l'une des revendications 1 à 12, dans lequel l'étape de préhension comprend une étape d'insertion de ladite au moins une tige rétractable (14) dans un évidement (E) du bloc à saisir.

21. Procédé d'assemblage selon l'une des revendications 13 à 20 à partir du système d'assemblage selon l'une des revendications 1 à 12, dans lequel l'étape de désolidarisation consiste à rétracter la tige rétractable (14) jusqu'à ce que la partie de la tige (14) préalablement insérée dans le bloc soit disposée hors du bloc.

22. Procédé d'assemblage selon l'une des revendications 13 à 21 à partir du système d'assemblage selon l'une des revendications 6 à 12, dans lequel au cours de chaque étape de déplacement de la structure de levage dans la structure de support, la structure de levage est guidée par le dispositif de guidage (40).

## Patentansprüche

1. Montagesystem zur Montage eines aus mehreren Blöcken (6) bestehenden Turms (2) für eine Windkraftanlage (1), aufweisend:
- eine Hebestruktur (11) zum Heben jedes der Blöcke (6) und
- eine Trägerstruktur (12) zum Tragen der Hebestruktur (11), wobei die Hebestruktur (11) fähig ist, relativ zur Trägerstruktur (12) zwischen einer Greifposition zum Greifen eines Blocks und einer Halteposition zum Halten der Blöcke bewegbar zu sein,
wobei die Hebestruktur (11) ein Greifelement (13) zum Greifen jedes Blocks (6) aufweist, **dadurch gekennzeichnet, dass** das Greifelement (13) mindestens eine zurückziehbare Stange (14) aufweist, die fähig ist, in eine Aussparung (E) jedes Blocks (6) einzudringen.

2. Montagesystem nach Anspruch 1, aufweisend mehrere im Wesentlichen in einer gleichen Ebene angeordnete Stangen (14), wobei zwei benachbarte Stangen zwischen sich einen Winkel bilden, der ungefähr 360° geteilt durch die Gesamtzahl der Stangen ist, und bevorzugt vier Stangen, wobei zwei Stangen zwischen sich einen Winkel von ungefähr 90° bilden.

3. Montagesystem nach einem der vorstehenden Ansprüche, aufweisend mindestens einen Haltearm (19), der eine seitliche Abstützung der Hebestruktur (11) zumindest an demjenigen der Blöcke macht, mit dem die Hebestruktur (11) gekoppelt ist.

4. Montagesystem nach Anspruch 3, aufweisend mehrere Haltearme (19), die in der Nähe eines ersten Endes (8a) des Blocks angeordnet sind, und mehrere Haltearme (19), die in der Nähe eines zweiten Endes (8b) des Blocks angeordnet sind.

5. Montagesystem nach einem der vorstehenden Ansprüche, aufweisend eine Führungsvorrichtung (40) zum Führen der Hebevorrichtung (11) in der Trägerstruktur (12).

6. Montagesystem nach dem vorstehenden Anspruch, in welchem die Führungsvorrichtung (40) mindestens ein Element (41) aufweist, das fähig ist, entlang einer Schiene der Trägerstruktur zu gleiten oder zu rollen.

7. Montagesystem nach dem vorstehenden Anspruch, in welchem die Führungsvorrichtung (40) zwei Paar der Elemente (41) aufweist, nämlich ein erstes Paar, das in der Nähe eines ersten Endes von Vertikalstützen (25) der Hebestruktur (11) angeordnet ist, und ein zweites Paar, das in der Nähe eines zweiten Endes der Vertikalstützen (25) der Hebestruktur (11) angeordnet ist.

8. Montagesystem nach einem der vorstehenden Ansprüche, in welchem die Trägerstruktur (12) mindestens zwei Pfeiler (21) aufweist, die zueinander parallel angeordnet sind.

9. Montagesystem nach einem der vorstehenden Ansprüche, aufweisend ein Antriebsmittel (30) zum Antreiben der Hebestruktur (11) in der Trägerstruktur (12).

10. Montagesystem nach dem vorstehenden Anspruch, in welchem das Antriebsmittel (30) mindestens eine Kabelwinde oder eine Schraubspindel oder eine Gestänge-Vorrichtung oder eine Winde mit großer Hubhöhe aufweist.

11. Montagesystem nach dem vorstehenden Anspruch, in welchem das Antriebsmittel vier Kabelwinden aufweist, wobei jedes Kabel mit einer der Vertikalstützen der Hebestruktur verbunden ist und fähig ist, relativ zur Trägerstruktur zu gleiten.

12. Montagesystem nach einem der vorstehenden Ansprüche, in welchem die Trägerstruktur und/oder die Hebestruktur mindestens eine Versteifungsstange (35, 36) aufweist.

13. Montageverfahren zum Montieren eines aus mehreren Blöcken (6) bestehenden Turms (2) für eine Windkraftanlage (1) ausgehend von einem Montagesystem (10), das aufweist:
- eine Hebestruktur (11) zum Heben jedes der Blöcke (6) und
- eine Trägerstruktur (12) zum Tragen der Hebestruktur (11), wobei die Hebestruktur (11) fäig ist, in der Trägerstruktur (12) zwischen einer Greifposition zum Greifen eines Blocks und einer Halteposition zum Halten der Blöcke bewegbar zu sein,
wobei die Hebestruktur (11) ein Greifelement (13) zum Greifen jedes Blocks (6) aufweist, das Greifelement (13) mindestens eine zurückziehbare Stange (14) aufweist, die fähig ist, in eine Aussparung (E) jedes Blocks (6) einzudringen,
wobei das Verfahren **dadurch gekennzeichnet ist, dass** es einen Schritt aufweist zum:
- Greifen eines Blocks (61) des Turms mit Hilfe der mindestens einen zurückziehbaren Stange (14) durch das Greifelement (13) der Hebestruktur(11) in der Greifposition und
- Verschieben der Hebestruktur (11) aus der Greifposition bis in eine Halteposition zum Halten der Blöcke, wobei die Verschiebung durch Gleiten der Hebestruktur (11) in der Trägerstruktur (12) erfolgt.

14. Montageverfahren nach Anspruch 13, wobei in dem Verschiebungsschritt der Block (61) mit der Hebestruktur gekoppelt ist.

15. Montageverfahren nach Anspruch 13 oder 14, wobei das Montagesystem (10) derart angeordnet ist, dass die Richtung der Verschiebung der Führungsstruktur eine vertikale Richtung ist und wobei in der Halteposition zum Halten der Blöcke der mit dem Eingriffselement (13) gekoppelte Block (61) in einer Höhe gehalten wird, die größer ist als die Höhe des Blocks (62), der als nächster zu montieren ist.

16. Montageverfahren nach einem der Ansprüche 13 bis 15, aufweisend einen Anordnungsschritt zum Anordnen eines anderen Blocks (62) in dem Montagesystem unterhalb des mit dem Greifelement (13) gekoppelten Blocks (61).

17. Montageverfahren nach Anspruch 16, aufweisend einen Verschiebungsschritt zum Verschieben der Hebestruktur (11) aus der Halteposition hin zu dem während des Anordnungsschritts angeordneten Blocks, bis der mit dem Greifelement gekoppelte Block (61) auf dem angeordneten Block (62) aufliegt.

18. Montageverfahren nach Anspruch 17, aufweisend einen Entkopplungsschritt zum Entkoppeln des Greifelements (13) und des Blocks (61), der während des Greifschritts mit dem Greifelement (13) gekoppelt worden ist.

19. Montageverfahren nach Anspruch 18, aufweisend einen Verschiebungsschritt des Verschiebens der Hebestruktur (11) bis zur Greifposition.

20. Montageverfahren nach einem der Ansprüche 13 bis 19 ausgehend von dem Montagesystem nach einem der Ansprüche 1 bis 12, wobei der Greifschritt einen Einführungsschritt zum Einführen der mindestens einen zurückziehbaren Stange (14) in eine Aussparung (E) des zu greifenden Blocks aufweist.

21. Montageverfahren nach einem der Ansprüche 13 bis 20 ausgehend von dem Montagesystem nach einem der Ansprüche 1 bis 12, wobei der Entkopplungsschritt darin besteht, die zurückziehbare Stange (14) zurückzuziehen, bis der zuvor in den Block eingeführte Teil der Stange (14) außerhalb des Blocks angeordnet ist.

22. Montageverfahren nach einem der Ansprüche 13 bis 21 ausgehend von dem Montagesystem nach einem der Ansprüche 6 bis 12, wobei während jedes Verschiebungsschritts zum Verschieben der Hebestruktur in der Trägerstruktur die Hebestruktur von der Führungsvorrichtung (40) geführt wird.

## Claims

1. System for assembling a tower (2) for a wind generator (1) consisting of a plurality of blocks (6), comprising:
- a structure for lifting (11) each one of said blocks (6), and
- a structure for supporting (12) said lifting structure (11), the lifting structure (11) able to be moveable in relation to the support structure (12) between a block-gripping position and a block-holding position,
**characterized in that** the lifting structure (11) comprising a body for gripping (13) each block (6), the body for gripping (13) comprising at least one rod (14) retractable able to penetrate into a recess (E) of each block (6).

2. System for assembling according to claim 1, comprising a plurality of rods (14) arranged substantially in a same plane and two adjacent rods forming between them an angle of about 360° divided by the total number of rods, and preferably four rods, with two rods forming between them an angle of about 90°.

3. System according to one of the preceding claims, comprising at least one holding arm (19) bearing laterally on the lifting structure (11) at least on one of the blocks with which the lifting structure (11) is secured.

4. System according to claim 3, comprising a plurality of holding arms (19) arranged in the vicinity of a first end (8a) of the block and a plurality of holding arms (19) arranged in the vicinity of a second end of the block (8b).

5. System as claimed in any preceding claim, comprising a device for guiding (40) the lifting structure (11) in the support structure (12).

6. System as claimed in the preceding claim, wherein the device for guiding (40) comprises at least one element (41) able to slide or roll along a rail of the support structure.

7. System as claimed in the preceding claim, wherein the device for guiding (40) comprises two pairs of said elements (41), a first pair arranged in the vicinity of a first end of uprights (25) of the lifting structure (11) and a second pair arranged in the vicinity of a second end of said uprights (25) of the lifting structure (11).

8. System according to one of the preceding claims, wherein the support structure (12) comprises at least two pillars (21) arranged parallel to one another.

9. System according to one of the preceding claims, comprising a motor means (30) of the lifting structure (11) in the structure support (12).

10. System as claimed in the preceding claim, wherein the motor means (30) comprises at least one actuator with a cable or with a threaded bar or a rack device or a large stroke actuator.

11. System as claimed in the preceding claim, wherein the motor means comprises four cable actuators, with each cable being connected to one of the uprights of the lifting structure and able to slide in relation to the support structure.

12. System according to one of the preceding claims, wherein the support structure and/or the lifting structure comprises at least one stiffening rod (35, 36).

13. Method for assembling a tower (2) for a wind generator (1) consisting of a plurality of blocks (6), using a system for assembling (10) comprising:
- a structure for lifting (11) each one of said blocks (6), and
- a structure for supporting (12) said lifting structure (11), the lifting structure (11) able to be moveable in the support structure (12) between a block-gripping position and a block-holding position, the lifting structure (11) comprising a body for gripping (13) each block (6), the gripping body (13) comprising at least one rod (14) retractable able to penetrate in a recess (E) of each block (6), the method for assembling being **characterized in that** it comprises a step of:
- gripping with said at least one retractable rod (14) of a block (61) of the tower by the body for gripping (13) the lifting structure (11) in the gripping position, and
- displacement of the lifting structure (11) from the gripping position to the holding position of the blocks, said displacement being realized by a sliding of the lifting structure (11) in the support structure (12).

14. Method for assembling according to claim 13, wherein, in the step of displacing, the block (61) is secured with the lifting structure.

15. Method for assembling according to claim 13 or 14, wherein the system for assembling (10) is arranged in such a way that the direction of displacement of the structure for guiding is a vertical direction, and wherein, in the block-holding position, the block (61) secured with the body for gripping (13) is held at a height that is higher than the height of the following block (62) to be assembled.

16. Method for assembling according to one of claims 13 to 15, comprising a step of depositing another block (62) in the system for assembling, under the block (61) secured with the body for gripping (13).

17. Method for assembling according to claim 16, comprising a step of displacing the lifting structure (11) from the holding position to the block deposited during the step of placing, until the block (61) secured with the body for gripping is placed on the deposited block (62).

18. Method for assembling according to claim 17, comprising a step of detaching the body for gripping (13) and the block secured (61) with the body for gripping (13) during the step of gripping.

19. Method for assembling according to claim 18, comprising a step of displacing the lifting structure (11) to the gripping position.

20. Method for assembling according to one of claims 13 to 19 using the system for assembling according to one of claims 1 to 12, wherein the step of gripping comprises a step of inserting a retractable rod (14) into a recess (E) of the block to be grasped.

21. Method for assembling according to one of claims 13 to 20 using the system for assembling according to one of claims 1 to 12, wherein the step of detaching consists in retracting the retractable rod (14) until the portion of the rod (14) inserted beforehand into the block is arranged outside of the block.

22. Method for assembling according to one of claims 13 to 21 using the system for assembling according to one of claims 6 to 12, wherein during each step of displacing the lifting structure in the support structure, the lifting structure is guided by the device for guiding (40).
